# EUROPEAN PATENT SPECIFICATION

(11) **EP 3 488 680 B1**
(45) Date of publication and mention of the grant of the patent: **11.05.2022**
(21) Application number: 17831141.1
(22) Date of filing: 21.07.2017
(51) Int. Cl.: A01D 34/416

(54) **TRIMMER LINE AND PRODUCTION METHOD FOR SAME**
TRIMMERFADEN UND HERSTELLUNGSVERFAHREN DAFÜR
LIGNE DE DÉBROUSSAILLEUSE ET PROCÉDÉ DE PRODUCTION DE CELLE-CI

(30) Priority: 22.07.2016 JP 2016144246
(43) Date of publication of application: 29.05.2019
(73) Proprietor: Saitou Nensi Corporation, Tomata-gun, Okayama 708-0312 (JP)
(72) Inventor: SAITO, Kenshi, Tomata-gun Okayama 708-0312 (JP)
(74) Representative: de Arpe Fernandez, Manuel
(86) International application number: PCT/JP2017/026470
(87) International publication number: WO 2018/016625

(56) References cited:
- JP-A- 2003 230 312
- JP-A- 2006 506 963
- JP-U- 3 149 886
- JP-U- 3 149 886
- US-A- 4 186 239
- US-A- 4 186 239

## Description

### TECHNICAL FIELD

The present disclosure relates to a trimmer line for use with a string trimmer, and a production method for the trimmer line.

### BACKGROUND

Conventionally, a string trimmer, which uses a line as a blade body for cutting grass, has been known (see, for example, Patent Literature 1). However, since a line (a trimmer line) for use as a blade body in a string trimmer is usually formed from a flexible material such as nylon, the line has the drawback of poor cutting performance compared with a metal circular saw or the like. In view of such circumstances, it is proposed to improve the cutting performance by forming notches and protrusions on the outer periphery of the trimmer line (see, for example, Patent Literature 2). Also, a cutting filament with an irregular or variant cross-section is proposed (see, Patent Literature 3). As an example, a cutting filament having four-lobe structure and being twisted upon its axis is disclosed in Fig. 11 of Patent Literature 3. According to the cutting filament, it is said that the cutting filament is provided with weak portions which retard or interrupt fibrillation and provide controlled axial fracture point, and the fracturing, when provided on such a controlled basis assures a continuous supply of blunt ended filamentary material which has maximum cutting efficiency.

### Citation List

### Patent Literatures

Patent Literature 1: Japanese Utility Model Laid-open No. S52-055833
Patent Literature 2: Japanese Utility Model No. 3149886
Patent Literature 3: United States Patent No. 4,186,239

### SUMMARY

### Technical Problems

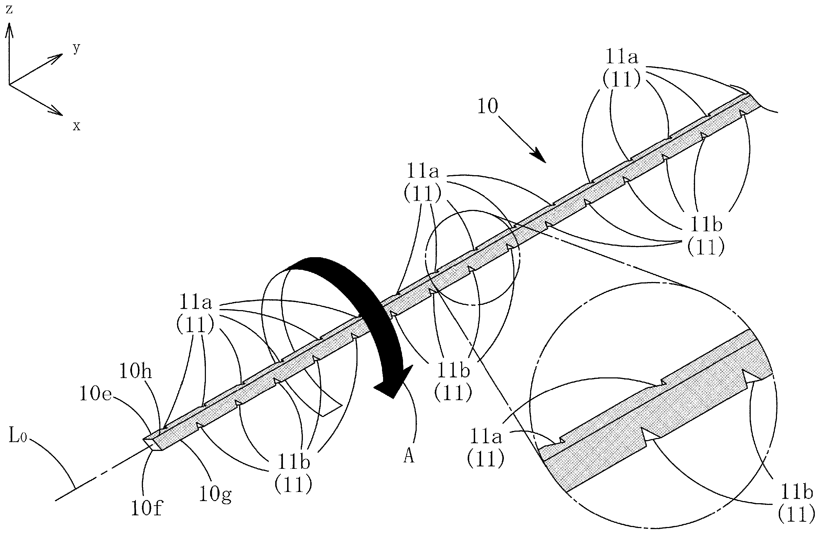

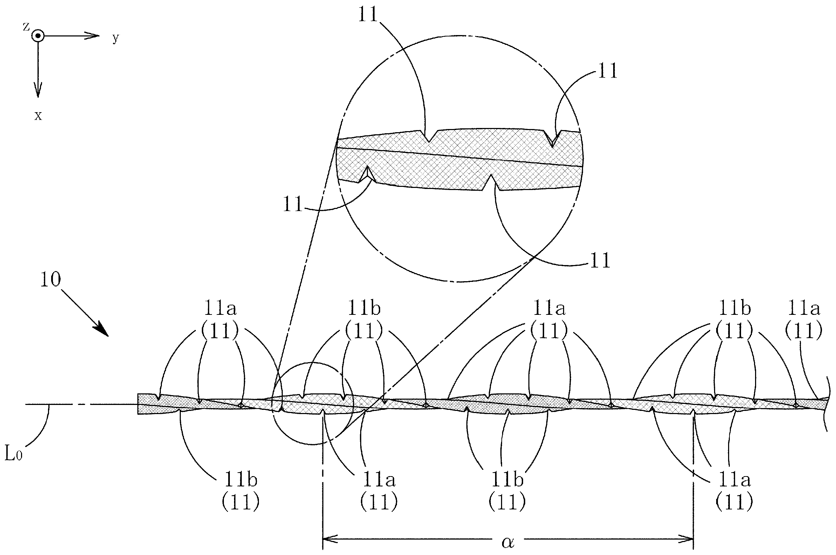

However, the trimmer line having notches and protrusions formed on the outer periphery cannot exhibit desired cutting performance unless the notch portions and the protrusion portions are oriented in the rotating direction of the trimmer line. In the trimmer line of the cited literature 2, the orientations of the notch portions and the protrusion portions provided on the outer periphery are limited to two directions in the mode shown in Fig. 1 of the same literature and limited to four directions in the mode shown in Fig. 5 of the same literature.

Therefore, in order to enable the trimmer line of the cited literature 2 to exhibit desired cutting performance, when attaching the trimmer line to a string trimmer, it is necessary to adjust the direction of the trimmer line (the direction around the center line along the longitudinal direction of the trimmer line) so that the notch portions and the protrusion portions on the outer periphery of the trimmer line are oriented in the rotating direction, and it takes time and labor to attach the trimmer line.

Additionally, in the trimmer line of the cited literature 2, even if the trimmer line is attached such that the notches and protrusions on the outer periphery are oriented in the rotating direction of the trimmer line, there is a concern that the orientations of the notches and protrusions deviate from the initial state while cutting grass, and desired cutting performance cannot be exhibited. Moreover, if the trimmer line of Patent Literature 2 is attached such that the notches and protrusions of the outer periphery are oriented in the rotating direction of the trimmer line, unpleasant wind noise is likely to occur when the trimmer line is rotated. As for the cutting filament of Patent Literature 3, since a notch row is formed on each of the four-lobe and the notch row is oriented in the rotating direction of the trimmer line, unpleasant wind noise occurs when the trimmer line is rotated.

It is conceivable that the above-mentioned problems relating to the cutting performance, time and labor required for attachment, and wind noise can be solved by forming the notch portions and protrusion portions facing various directions (various directions perpendicular to the center line along the longitudinal direction of the trimmer line), but such a trimmer line has not been found so far.

The present disclosure is made to solve the above-mentioned problems and to provide a trimmer line that can exhibit desired cutting performance regardless of the direction the trimmer line is attached, and can reduce generation of unpleasant wind noise and achieve excellent quietness. It is also an object of the present disclosure to provide a trimmer line production method that can easily produce this trimmer line.

### Solution to Problems

The above problems are solved by providing a trimmer line for use with a string trimmer according to the features of claim 4.

In the trimmer line of the present disclosure, as described above, a large number of notch portions (notch portions capable of catching grass) oriented in different directions are formed on the outer periphery of the line body. Consequently, whichever direction the trimmer line of the present disclosure is attached, any one of the notch portions is oriented in the rotating direction of the trimmer line or a direction near the orientation direction. Moreover, since the line body of the trimmer line according to the present disclosure has the twisted structure, the outer periphery has a spiral form due to the "twist". Therefore, in the trimmer line of the present disclosure, even if grass hits a part of the outer periphery of the line body where the notch portion is not formed, the grass can be easily guided into a part where the notch portion is formed.

Thus, the trimmer line of the present disclosure can exhibit desired cutting performance regardless of the direction the trimmer line is attached. Moreover, in the trimmer line of the present disclosure, since the orientations of the notch portions are not aligned in the same direction, unpleasant wind noise is less likely to occur even when the trimmer line is rotated, and excellent quietness is achieved.

The trimmer line is produced by the production method as disclosed in claim 1.

With the production method of the present disclosure, the trimmer line of the present disclosure can be easily produced. According to the production method of the present disclosure, in the notch forming step, only one notch row may be formed, but it is preferable to form two or more notch rows. Accordingly, the number of the notch portions is increased, grass that hits the trimmer line is easily caught in any one of the notch portions, and the cutting performance of the trimmer line can be further enhanced. In the case where two or more notch rows are formed, two of the notch rows preferably adopt the following configuration.

That is to say, it is preferable to adopt the configuration in which, in the notch forming step,
one notch row constituted by a large number of notch portions oriented to one side is formed along the longitudinal direction of the line body on the outer periphery of the line body on the one side,
the one side is one direction perpendicular to the longitudinal direction of the line body,
another notch row constituted by a large number of notch portions oriented to other side is formed on the outer periphery of the line body on the other side,
the other side is the other direction with respect to said one direction that is perpendicular to the longitudinal direction of the line body.

By adopting this configuration, it is possible to efficiently arrange the notch portions oriented in different directions on the outer periphery of the trimmer line. If this configuration is adopted, it is preferable to adopt the following configuration together with this configuration.

That is to say, it is preferable to adopt the configuration in which, in the notch forming step,
the notch portions constituting the one notch row and the notch portions constituting the another notch row are formed to be staggered in the longitudinal direction of the line body.

By adopting this configuration, it is possible to avoid the trimmer line from becoming too thin locally at the part where the notch portion is provided, thereby maintaining the strength of the trimmer line and preventing breakage of the trimmer line.

In the production method of the present disclosure, the specific form (such as the cross-sectional shape) of a line body, which is used as a base material of a trimmer line, is not particularly limited as long as the line body is in the form of a line. As the cross-sectional shape of the line body, it is possible to adopt a shape having a curved line such as a circle and an ellipse, a polygon such as a triangle, a square and a hexagon, or a combination of these shapes.

By adopting the constitution as disclosed in claim 4, the notch portions for catching grass can be formed in an acute angle portion of the line body (the corner portion formed by the first face and the second face, or the corner portion formed by the third face and the fourth face), and grass that is guided into the notch portions can be easily cut.

### Advantageous Effects of Invention

As described above, according to the present disclosure, it is possible to provide a trimmer line that can exhibit desired cutting performance regardless of the direction the trimmer line is attached, and can reduce generation of unpleasant wind noise and achieve excellent quietness. It is also possible to provide a trimmer line production method that can easily produce this trimmer line.

### BRIEF DESCRIPTION OF THE DRAWINGS

Fig. 1 is a perspective view illustrating a line body after completion of a notch forming step;
Fig. 2 is a plan view illustrating the line body after completion of the notch forming step;
Fig. 3 is a cross-sectional view illustrating a state in which the line body after completion of the notch forming step is cut along a plane perpendicular to a center line along the longitudinal direction thereof;
Fig. 4 is a perspective view illustrating the line body (trimmer line) after completion of a twisting step; and
Fig. 5 is a plan view illustrating the line body (trimmer line) after completion of the twisting step.

### DETAILED DESCRIPTION OF THE EMBODIMENTS

Preferred embodiments of a trimmer line and a production method for the same of the present disclosure will be specifically described using the drawings.

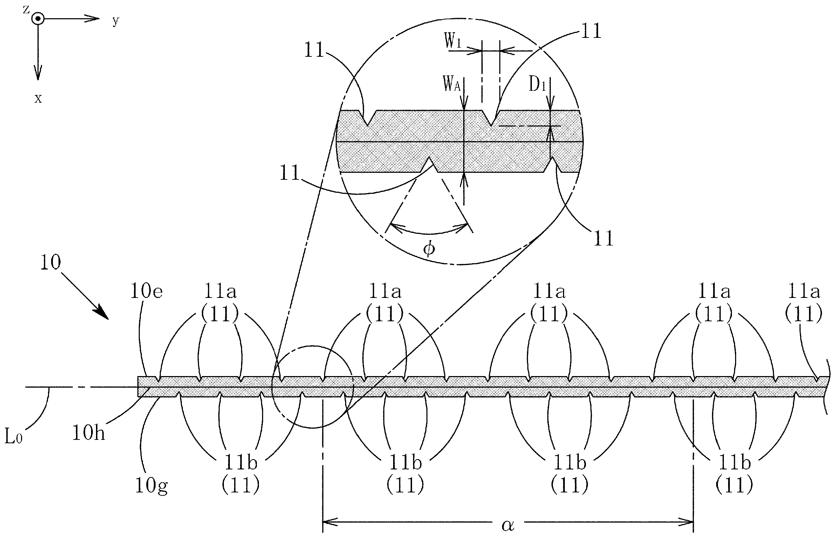

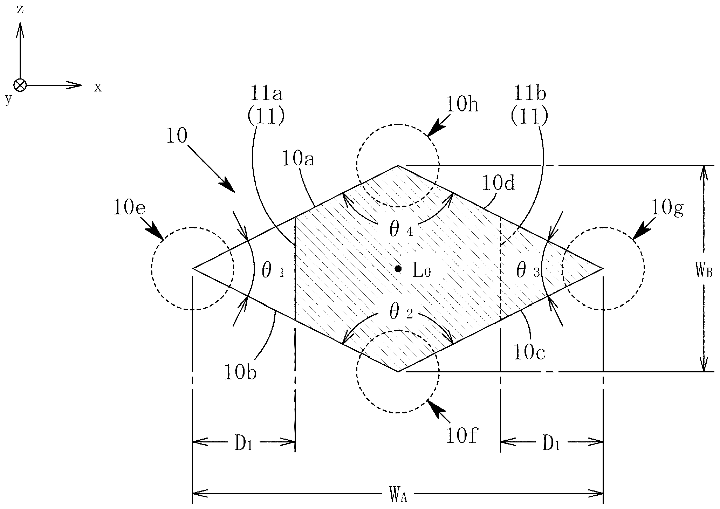

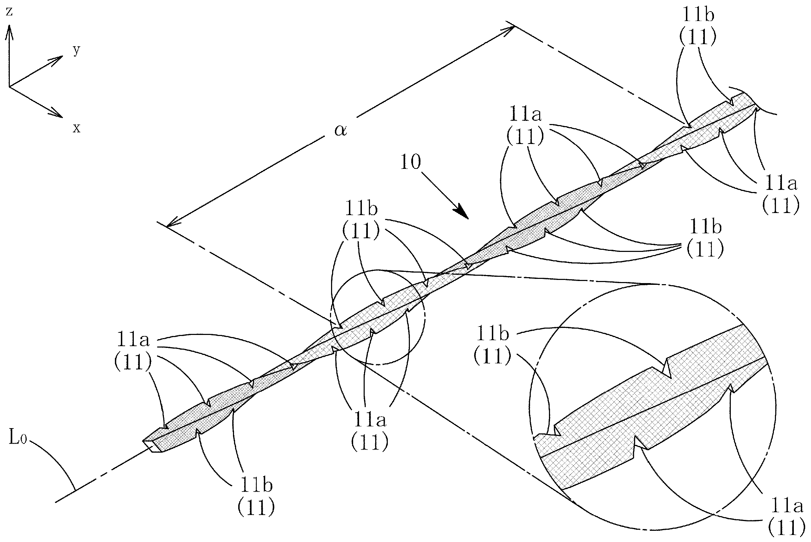

Fig. 1 is a perspective view illustrating a line body 10 after completion of a notch forming step. Fig. 2 is a plan view illustrating the line body 10 after completion of the notch forming step. Fig. 3 is a cross-sectional view illustrating a state in which the line body 10 after completion of the notch forming step is cut along a plane perpendicular to a center line L₀ along the longitudinal direction thereof. Fig. 4 is a perspective view illustrating the line body 10 (trimmer line) after completion of a twisting step. Fig. 5 is a plan view illustrating the line body 10 (trimmer line) after completion of the twisting step.

### 1. Trimmer Line

A trimmer line of the present embodiment is attached to a string trimmer (not shown) for use, and functions as a rotary blade body of the string trimmer.

That is to say, the string trimmer usually includes: a rod unit; a rotary drive unit mounted at a distal end (lower end) of the rod unit; a rotary driving apparatus (engine or the like) for rotationally driving the rotary drive unit; and a handle unit for handling the rod unit, and the trimmer line of the present embodiment is attached to the rotary drive unit of the string trimmer for use. The trimmer line may be directly attached to the rotary drive unit of the string trimmer, or may be attached indirectly through a holder or the like for winding the trimmer line.

At least one end of the trimmer line attached to the string trimmer (at least one end of a pair of ends in the longitudinal direction of the trimmer line) is a free end (which is not fixed to another member). When the rotary drive unit of the string trimmer is stationary, a predetermined section of the trimmer line from the free end is in a non-tensioned state (the state of being hanged down from the rotary drive unit), but when the rotary drive unit is driven to rotate, the predetermined section of the trimmer line is in a tensioned state (the state of being stretched in a substantially perpendicular direction to the rotation center line of the rotary drive unit (in a substantially horizontal direction)) due to centrifugal force generated at the time of driving, and can function as a blade for cutting grass.

As illustrated in Fig. 4 and Fig. 5, the trimmer line of the present embodiment includes a number of notch portions 11 repeatedly formed on the outer periphery of the line body 10, which is a base material, along the longitudinal direction of the line body 10. Therefore, when the rotary drive unit of the string trimmer is rotated, grass that hits the outer periphery of the trimmer line (line body 10) can be caught in the notch portions 11 and cut.

In addition, as illustrated in Fig. 4 and Fig. 5, the trimmer line of the present embodiment has a structure in which the line body 10 is twisted, and the orientations of the notch portions 11 (the orientation from the deepest part of each notch portion 11 to the opening side of the notch portion 11 in a direction perpendicular to the center line L₀ of the line body 10; hereinafter the same shall apply to "the orientation of the notch portion 11") vary spirally about the center line L₀ of the line body 10. Therefore, regardless of the direction the trimmer line is attached (the direction of twist about the center line L₀; hereinafter the same shall apply to "the orientation the trimmer line is attached"), the trimmer line can exhibit desired cutting performance.

In other words, there is a concern that desired cutting performance cannot be exhibited unless the notch portions 11 are oriented in the rotating direction of the trimmer line, but, in the trimmer line of the present embodiment, a large number of notch portions 11 are formed and oriented in different directions, and consequently whichever direction the trimmer line is attached, any one of the notch portions 11 is oriented in the rotating direction of the trimmer line, or a direction near the rotating direction, and grass that hits the outer periphery of the trimmer line (line body 10) is easily caught in any one of the notch portions 11.

Moreover, in the trimmer line of the present embodiment, since the line body 10 has the twisted structure, the outer periphery thereof is spiral due to the "twist". Thus, the trimmer line of the present embodiment has a structure in which, even when grass hits a part on the outer periphery of the line body 10 where the notch portion 11 is not formed, the grass can be easily guided to a part where the notch portion 11 is formed.

Furthermore, since the trimmer line of the present embodiment is configured such that the orientations of the notch portions 11 are not aligned in the same direction, unpleasant wind noise is less likely to occur even when the trimmer line is rotated, and excellent quietness is achieved.

### 2. Production Method for Trimmer Line

Although the production method for the trimmer line of the present embodiment is not particularly limited, the trimmer line can be suitably produced by performing a notch forming step and a twisting step on the line body 10, which is the base material of the trimmer line.

### 2.1 Line Body

The material of the line body 10 for use in producing the trimmer line is not particularly limited as long as the line body 10 has a necessary strength as the blade body, and a metal wire material may be used, but, in general, a resin wire material is used in consideration of processability in the later-described notch forming step and twisting step. The trimmer line of the present embodiment uses a nylon line which has an increased strength by being filled with glass fibers as the line body 10.

The shape of the cross section of the line body 10 is also not particularly limited, but in the trimmer line of the present embodiment, as illustrated in Fig. 3, the cross section is a rhombus. Specifically, the outer peripheral surface of the line body 10 is constituted by a first face 10a, a second face 10b, a third face 10c and a fourth face 10d. Each of an angle θ₁ formed by the first face 10a and the second face 10b and an angle θ₃ formed by the third face 10c and the fourth face 10d is smaller than 90°, and each of an angle θ₂ formed by the second face 10b and the third face 10c and an angle θ₄ formed by the fourth face 10d and the first face 10a is larger than 90°. The angles θ₁ and θ₃ are equal to each other, and also the angles θ₂ and θ₄ are equal to each other.

Accordingly, in the line body 10, each of a corner portion 10e formed by the first face 10a and the second face 10b and a corner portion 10g formed by the third face 10c and the fourth face 10d has an acute angle so that grass that hits the corner portions 10e, 10g is easily cut. On the other hand, each of a corner portion 10f formed by the second face 10b and the third face 10c and a corner portion 10h formed by the fourth face 10d and the first face 10a has an obtuse angles.

Specific magnitudes of the angles θ₁, θ₂, θ₃, θ₄ are not particularly limited. However, if the angles θ₁, θ₃ of the acute angle portions (the corner portion 10e and the corner portion 10g) are too small, there is a concern that the portions become fragile and are easily chipped. Hence, the angles θ₁ and θ₃ are usually 10° or more. Each of the angles θ₁ and θ₃ is preferably 20° or more, and more preferably 30° or more.

On the other hand, if the angles θ₁, θ₃ are too large, the above-mentioned effect (the effect of easily cutting grass that hits the corner portions 10e, 10g) is hard to achieve, and the significance of making the line body 10 with a cross section in the shape of a rhombus is impaired. Therefore, each of the angles θ₁ and θ₃ is usually 80° or less. Each of the angles θ₁ and θ₃ is preferably 70° or less, and more preferably 60° or less. In the trimmer line of the present embodiment, each of the angles θ₁ and θ₃ is about 50°. Accordingly, each of the angles θ₂ and θ₄ is about 130°.

Moreover, a lateral width W_{A} and a vertical width W_{B} of the line body 10 are also not particularly limited. However, if the lateral width W_{A} and the vertical width W_{B} of the line body 10 are too narrow, not only the strength of the line body 10 cannot be maintained, but also the dimensions of the notch portions 11 formed in the line body 10 in the later-described notch forming step are inevitably small, and there is a concern that grass is hard to be caught in the notch portions 11. Therefore, the lateral width W_{A} and the vertical width W_{B} of the line body 10 are usually 1 mm or more. The lateral width W_{A} and the vertical width W_{B} of the line body 10 are preferably 2 mm or more, and more preferably 3 mm or more.

On the other hand, if the lateral width W_{A} and the vertical width W_{B} of the line body 10 are too wide, there is a concern that the trimmer line becomes difficult to handle. Hence, the lateral width W_{A} and the vertical width W_{B} of the line body 10 are usually 15 mm or less. The lateral width W_{A} and vertical width W_{B} of the line body 10 are preferably 12 mm or less, and more preferably 10 mm or less.

### 2.2 Notch Forming Step

As illustrated in Fig. 1 and Fig. 2, the notch forming step is a step of forming a notch row constituted by a large number of notch portions 11 oriented in the same direction, on the outer periphery of the line body 10 along the longitudinal direction of the line body 10.

As described above, as the notch row, it is possible to provide only one row, but it is preferable to provide two or more rows. In the trimmer line of the present embodiment, as the notch row, a total of two rows are provided, that is, a notch row constituted by a plurality of notch portions 11a provided along a ridgeline of the corner portion 10e of the line body 10 (hereinafter the notch row constituted by the notch portions 11a may be referred to as "the first notch row"), and a notch row constituted by a plurality of notch portions 11b provided along a ridgeline of the corner portion 10g of the line body 10 (hereinafter the notch row constituted by the notch portions 11b may be referred to as "the second notch row"). Each of the notch portions 11a constituting the first notch row is oriented to the negative side in an x-axis direction, and each of the notch portions 11b constituting the second notch row is oriented to the positive side in the x-axis direction.

Thus, it is possible to efficiently arrange the notch portions 11 having different orientations on the outer periphery of the trimmer line by forming the first notch row constituted by a large number of notch portions 11a oriented to the one side, on one side in a direction (the negative side in the x-axis direction) perpendicular to the longitudinal direction (y-axis direction) of the line body 10, on the outer periphery of the line body 10, and forming another notch row constituted by a large number of notch portions 11b oriented to the other side, on the other side in the direction (the positive side in the x-axis direction) perpendicular to the longitudinal direction (y-axis direction) of the line body 10, on the outer circumferential portion of the line body 10.

In the trimmer line of the present embodiment, although the notch portion 11 is not provided in a part along a ridgeline of the corner portion 10f of the line body 10 and in a part along a ridgeline of the corner portion 10h of the line body 10, a notch row constituted by a plurality of notch portions 11 may also be provided in parts along these ridgelines. Accordingly, it is possible to more efficiently arrange the notch portions 11 having different orientations on the outer periphery of the trimmer line.

The notch portion 11a constituting the first notch row and the notch portion 11b constituting the second notch row may be arranged in the same part with respect to the longitudinal direction (y-axis direction) of the line body 10 (at the points with the same coordinate in the y-axis). In this case, however, there is a concern that the part of the line body 10 where the notch portion 11 is provided becomes too thin. Therefore, in the trimmer line of the present embodiment, the notch portions 11a constituting the first notch row and the notch portions 11b constituting the second notch row are formed such that the notch portions 11a and the notch portions 11b are staggered in the longitudinal direction (y-axis direction) of the line body 10 (at points with different coordinates in the y-axis).

The arrangement pitch of adjacent notch portions 11a of each notch row (the arrangement pitch in the y-axis direction) is not particularly limited. However, if the arrangement pitch of adjacent notch portions 11a is too narrow, it is difficult to arrange the notch portions 11a constituting the first notch row and the notch portions 11b constituting the second notch row in a staggered manner. Therefore, the arrangement pitch of adjacent notch portions 11 in each notch row is preferably 1 mm or more. This arrangement pitch is more preferably 3 mm or more, and still more preferably 5 mm or more.

On the other hand, if the arrangement pitch of adjacent notch portions 11a of each notch row (the arrangement pitch in the y-axis direction) is too wide, there is a concern that a situation in which even when grass hits the trimmer line, the grass will not be caught in any one of the notch portions 11 and will not be cut tends to occur. Therefore, the arrangement pitch of adjacent notch portions 11 in each notch row is preferably 30 mm or less. This arrangement pitch is more preferably 20 mm or less, and still more preferably 15 mm or less.

The shape of each notch portion 11 in a plan view (the shape viewed from the positive side in the z-axis direction) is also not particularly limited. In the plane view, the notch portion 11 may have a semicircular shape, a semi-elliptical shape, or a polygonal shape such as a rectangular shape. However, it is preferable that the notch portion 11 has a shape that makes it easy for grass to be caught. In the trimmer line of the present embodiment, each of the notch portions 11 is formed in a triangular shape so that grass is easily caught in the notch portions 11.

Further, the dimensions of each of the notch portions 11 also vary depending on the thickness of the line body 10, etc., and are not particularly limited. However, if a depth D₁ (Fig. 2) and a width W₁ (Fig. 2) of the notch portion 11 are too small, there is a concern that grass is hard to be caught in the notch portion 11. Therefore, the depth D₁ and the width W₁ of the notch portion 11 are usually 1 mm or more. The depth D₁ and the width W₁ of the notch portion 11 are preferably 1.5 mm or more, and more preferably 2 mm or more.

If the lower limit of the depth D₁ of each notch portion 11 is specified by a ratio D₁/W_{A} of the depth D₁ of the notch portion 11 to the lateral width W_{A} (Fig. 2) of the line body 10, the ratio D₁/W_{A} is preferably 0.1 or more, more preferably 0.15 or more, and still more preferably 0.2 or more. Further, if the lower limit of the width W₁ of the notch portion 11 is specified by a ratio W₁/D₁ of the width W₁ of the notch portion 11 to the depth D₁ of the notch portion 11, the ratio W₁/D₁ is preferably 0.3 or more, and more preferably 0.5 or more.

On the other hand, if the depth D₁ of the notch portion 11 is to deep, it is necessary to increase the lateral width of the line body 10 (the width in the x-axis direction), and there is a concern that the line body 10 becomes difficult to handle. Moreover, if the width W₁ of the notch portion 11 is too large, it is necessary to increase the arrangement pitch of adjacent notch portions 11 in each notch row, and there is a concern that the notch portions 11 cannot be efficiently arranged, and there is also a concern that grass which has entered into the notch portions 11 tends to escape without being caught in the notch portions 11. Therefore, the depth D₁ and the width W₁ of each notch portion 11 are preferably 7 mm or less, and more preferably 5 mm or less.

If the upper limit of the depth D₁ of each notch portion 11 is specified by a ratio D₁/W_{A} of the depth D₁ of the notch portion 11 to the lateral width W_{A} (Fig. 2) of the line body 10, the ratio D₁/W_{A} is preferably 0.5 or less, more preferably 0.4 or less, and still more preferably 0.3 or less. Further, if the upper limit of the width W₁ of the notch portion 11 is specified by a ratio W₁/D₁ of the width W₁ of the notch portion 11 to the depth D₁ of the notch portion 11, the ratio W₁/D₁ is preferably 2 or less, and more preferably 1.5 or less.

Furthermore, in the notch forming step, the method of providing the notch portions 11 in the line body 10 is not particularly limited. The notch portions 11 may be formed simultaneously when the line body 10 is formed, but it is preferable to form the notch portions 11 after the line body 10 is formed in a line shape without the notch portions 11. Accordingly, the notch portions 11 can be easily provided in the line body 10. In the trimmer line of the present embodiment, after the line body 10 is formed in the form of a line without the notch portions 11, the notch portions 11 are provided in the line body 10 by performing press working on the line body 10.

When performing press working on the line body 10, the line body 10 may be punched out vertically (punched out parallel to a vertical width direction (z-axis direction) of the line body 10), but it is also preferable to punch out the line body 10 diagonally (punch out the line body 10 in a direction inclined with respect to the vertical width direction (z-axis direction) of the line body 10). Accordingly, the edge part of each of the notch portions 11 formed in the line body 10 can have an acute angle, and grass that is caught in the notch portion 11 can be easily cut at the edge part.

Upon completion of the notch forming step described above, the twisting step is subsequently performed.

### 2.3 Twisting Step

As shown by an arrow A in Fig. 1, the twisting step is a step of twisting the line body 10 having the notch portions 11 formed therein. As illustrated in Fig. 4 and Fig. 5, the line body 10 that has undergone the twisting step is twisted spirally about the center line L₀ thereof.

Thus, by twisting the line body 10, the notch portions 11 which have the same orientation at the stage of completing the above-mentioned notch forming step can be easily oriented in different directions. Consequently, regardless of the direction the trimmer line is attached, it is possible to enable the trimmer line to exhibit desired cutting performance. In addition, since unpleasant wind noise is less likely to occur even when the trimmer line is rotated, it is also possible to obtain the trimmer line which excels in quietness.

A specific method for twisting is not particularly limited as long as the line body 10 can be twisted about the center line L₀ thereof. The method for twisting also varies depending on the material of the line body 10, etc. For example, in the case where the material of the line body 10 is a material prone to plastic deformation, such as a metal wire, twisting can be easily performed by relatively turning both ends of the line body 10 about the center line L₀.

On the other hand, in the case where the line body 10 is a resin wire like the trimmer line of the present embodiment, examples of possible methods include: a method in which after twisting the line body 10 by relatively turning both ends of the line body 10 about the center line L₀ while heating the line body 10, the line body 10 is cooled to harden; a method in which after twisting the line body 10 by relatively turning both ends of the line body 10 about the center line L₀, the line body 10 is heated and cooled to harden; and a method in which an extrusion molding die having a through-hole with an inner circumferential surface formed in a spiral shape is prepared, and the line body 10 is inserted into the through-hole of the extrusion molding die while heating, and pushed out and then cooled to harden.

A twist pitch α in the twisting performed on the line body 10 in the twisting step (the length along the center line L₀ of a section in which the line body 10 makes one turn about the center line L₀, see Fig. 4 and Fig. 5) varies depending on the arrangement pitch of the notch portions 11, etc., and is not particularly limited. However, if the twist pitch α is too short, the number of the notch portions 11 arranged in the twist pitch α becomes smaller, and not only it is hard to make changes in the orientations of the notch portions 11, but also there is a concern that the line body 10 is easy to break by the twisting.

Therefore, the twist pitch α of the line body 10 is preferably 3 cm or more, and more preferably 5 cm or more. If the lower limit of the twist pitch α of the line body 10 is specified by the number of the notch portions 11 arranged within the twist pitch α, the twist pitch α of the line body 10 is preferably set such that five or more notch portions 11 are present within the twist pitch α. The number of the notch portions 11 present within the twist pitch α is preferably 10 or more, and more preferably 15 or more.

On the other hand, if the twist pitch α of the line body 10 is too long, the line body 10 cannot make one turn about the center line L₀ within the entire length of a section of the line body 10 which hits grass, and there is a concern that a direction in which the notch portions 11 are not oriented is present.

Therefore, the twist pitch α of the line body 10 is preferably 15 cm or less, and more preferably 10 cm or less. If the upper limit of the twist pitch α of the line body 10 is specified by the number of the notch portions 11 arranged within the twist pitch α, the twist pitch α of the line body 10 is preferably set such that 100 or less notch portions 11 are present within the twist pitch α. The number of notch portions 11 present within the twist pitch α is preferably 50 or less, and more preferably 30 or less.

Upon the completion of the above-mentioned twisting step, the production of the trimmer line is completed. However, after the twisting step, it is also possible to provide another step, such as applying a coating to the outer peripheral surface of the line body 10.

### 2.4 Conclusion

The trimmer line produced by the above production method excels not only in cutting performance, but also in quietness.

### REFERENCE SIGNS LIST

10 Line body
10a First face
10b Second face
10c Third face
10d Fourth face
10e Corner portion formed by the first face and the second face
10f Corner portion formed by the second face and the third face
10g Corner portion formed by the third face and the fourth face
10h Corner portion formed by the fourth face and the first face
11 Notch portions
11a Notch portions (notch portions constituting the first notch row)
11b Notch portions (notch portions constituting the second notch row)
D₁ Depth of notch portion
L₀ Center line along the longitudinal direction of the line body
W₁ Width of notch portion
W_{A} Lateral width of the line body
W_{B} Vertical width of the line body
α Twist pitch of the line body
θ₁ Angle formed by the first face and the second face constituting the outer peripheral surface of the line body
θ₂ Angle formed by the second face and the third face constituting the outer circumferential surface of the line body
θ₃ Angle formed by the third face and the fourth face constituting the outer peripheral surface of the line body
θ₄ Angle formed by the fourth face and the first face constituting the outer circumferential surface of the line body

## Claims

1. A production method for a trimmer line for use with a string trimmer, the production method comprising:
a notch forming step of forming a notch row constituted by a large number of notch portions (11) oriented in a same direction, on an outer periphery of a line body (10) along a longitudinal direction of the line body (10); **characterized in that** further comprising:
a twisting step of twisting the line body (10) that has undergone the notch forming step, whereby obtaining the trimmer line in which the notch portions (11) constituting the same notch row are oriented in different directions, wherein
the line body (10) has an outer peripheral surface of a rhombus-shaped cross section, the outer peripheral surface comprising:
a first face (10a);
a second face (10b) forming an acute angle with respect to the first face (10a);
a third face (10c) forming an obtuse angle with respect to the second face (10b); and
a fourth face (10d) forming an acute angle with respect to the third face (10c) and forming an obtuse angle with respect to the first face (10a), and
in the notch forming step,
the one notch row is formed along a ridgeline between the first face (10a) and the second face (10b), and
the other notch row is formed along a ridgeline between the third face (10c) and the fourth face (10d),
the notch portion (11) is not provided in a part along a ridgeline of a corner portion (10f) formed by the second face (10b) and third face (10c) and in a part along a ridgeline of a corner portion (10h) formed by the fourth face (10d) and the first face (10a).

2. The production method for the trimmer line according to claim 1, wherein, in the notch forming step,
one notch row constituted by a large number of notch portions (11a) oriented to one side is formed along the longitudinal direction of the line body (10) on the outer periphery of the line body (10) on the one side,
the one side is one direction perpendicular to the longitudinal direction of the line body (10),
another notch row constituted by a large number of notch portions (11b) oriented to other side is formed on the outer periphery of the line body (10) on the other side,
the other side is the other direction with respect to said one direction that is perpendicular to the longitudinal direction of the line body (10).

3. The production method for the trimmer line according to claim 2, wherein, in the notch forming step, the notch portions (11a) constituting the one notch row and the notch portions (11b) constituting the other notch row are formed to be staggered in the longitudinal direction of the line body (10) .

4. A trimmer line for use with a string trimmer, the trimmer line comprising: a line body (10) having a twisted structure; and
a number of notch portions (11) formed repeatedly along a longitudinal direction of the line body (10) on an outer periphery of the line body (10), **characterized in that**
orientations of the notch portions (11) in a perpendicular direction to a center line of the line body (10) along the longitudinal direction vary spirally about the center line, wherein
the line body (10) has an outer peripheral surface of a rhombus-shaped cross section, the outer peripheral surface comprising:
a first face (10a);
a second face (10b) forming an acute angle with respect to the first face (10a);
a third face (10c) forming an obtuse angle with respect to the second face (10b); and
a fourth face (10d) forming an acute angle with respect to the third face (10c) and forming an obtuse angle with respect to the first face (10a), and
the one notch row is formed along a ridgeline between the first face (10a) and the second face (10b), and
the other notch row is formed along a ridgeline between the third face (10c) and the fourth face (10d),
the notch portion (11) is not provided in a part along a ridgeline of a corner portion (10f) formed by the second face (10b) and third face (10c) and in a part along a ridgeline of a corner portion (10h) formed by the fourth face (10d) and the first face (10a).

## Patentansprüche

1. Eine Herstellungsmethode für eine Trimmerleine für den Gebrauch mit einem Fadentrimmer, wobei die Herstellungsmethode Folgendes umfasst:
Einen Kerbformungsschritt zum Bilden von Kerbreihen, die durch eine grosse Anzahl von Kerbabschnitten (11) gebildet werden, die in derselben Richtung an einem Aussenumfang eines Leinenkörpers (10) in Längsrichtung des Leinenkörpers (10) orientiert sind; **dadurch gekennzeichnet, dass** sie weiter Folgendes umfasst:
Einen Torsionsschritt für das Drehen des Leinenkörpers (10), die beim Kerbformungsschritt stattgefunden hat, wodurch die Trimmerleine erhalten wird, in der der Kerbabschnitt (11) der dieselbe Kerbreihe bildet in anderen Richtungen orientiert ist, wobei der Leinenkörper (10) eine Aussenumfangsfläche eines rhombenförmigen Querschnitts aufweist, und die Aussenumfangsfläche Folgendes umfasst:
Eine erste Oberfläche (10a); eine zweite Oberfläche (10b), die einen spitzen Winkel mit Bezug auf die erste Oberfläche (10a) bildet; eine dritte Oberfläche (10c), die einen stumpfen Winkel mit Bezug auf die zweite Oberfläche (10b) bildet; und
eine vierte Oberfläche (10d), die einen spitzen Winkel mit Bezug auf die dritte Oberfläche (10c) und einen stumpfen Winkel mit Bezug auf die erste Oberfläche (10a) bildet, und wobei beim Schritt der Kerbformung die eine Kerbreihe längs einer Kammlinie zwischen der ersten Oberfläche (10a) und der zweiten Oberfläche (10b) gebildet wird, und die andere Kerbreihe längs einer Kammlinie zwischen der dritten Oberfläche (10c) und der vierten Oberfläche (10d) gebildet wird, der Kerbabschnitt (11) nicht an einem Teil längs einer Kammlinie eines durch die zweite Oberfläche (10b) und dritte Oberfläche (10c) gebildeten Eckabschnitts (10f) und an einem Teil längs einer Kammlinie eines durch die vierte Oberfläche (10d) und die erste Oberfläche (10a) gebildeten Eckabschnitts vorgesehen ist,

2. Die Herstellungsmethode für die Trimmerleine gemäss Anspruch 1, bei der im Kerbformungsschritt eine, durch eine grosse Anzahl von nach einer Seite orientierten Kerbabscnitten (11a), Kerbreihe in Längsrichtung des Leinenkörpers (10) am Aussenumfang des Leinenkörpers (10) an der einen Seite gebildet ist, wobei die eine Seite in einer Richtung senkrecht zur Längsrichtung des Leinenkörpers (10) verläuft, eine andere durch eine grosse Anzahl von Kerbabschnitten (11b) gebildete Kerbreihe, die zur anderen Seite orientiert ist, am Aussenumfang des Leinenkörpers (10) auf der anderen Seite ausgebildet ist, wobei die andere Seite die andere Richtung ist mit Bezug auf besagte, senkrecht zur Längsrichtung des Leinenkörpers (10) verlaufende Richtung.

3. Die Herstellungsmethode für die Trimmerleine gemäss Anspruch 2, bei der im Kerbformungsschritt die Kerbabscnitte (11a), die die eine Kerbreihe bilden, und die Kerbabschnitte, die die andere Kerbreihe bilden, so geformt sind, dass sie in Längsrichtung des Leinenkörpers (10) gestaffelt werden.

4. Eine Trimmerleine für den Gebrauch mit einem Fadentrimmer, wobei die Trimmerleine Folgendes umfasst: einen Leinenkörper (10) mit einer Torsionsstruktur; und eine Anzahl von Kerbabschnitten (11), die wiederholt in einer Längsrichtung des Leinenkörpers (10) an einem Aussenumfang des Leinenkörpers (10) ausgebildet sind, **dadurch gekennzeichnet, dass**:
Die Orientierungen der Kerbabschnitte (11) in einer senkrechten Richtung zu einer Mittelachse des Leinenkörpers (10) in Längsrichtung spiralförmig um die Mittelachse variieren, wobei der Leinenkörper (10) eine Aussenumfangsfläche mit einem rhombusförmigen Querschnitt aufweist, wobei die Aussenumfangsfläche Folgendes umfasst:
eine erste Oberfläche (10a); eine zweite Oberfläche (10b) die einen spitzen Winkel mit Bezug auf die erste Oberfläche (10a) bildet;
eine dritte Oberfläche (10c), die einen stumpfen Winkel mit Bezug auf die zweite Oberfläche (10b) bildet; und
eine vierte Oberfläche (10d), die einen spitzen Winkel mit Bezug auf die dritte Oberfläche (10c) und einen stumpfen Winkel mit Bezug auf die erste Oberfläche (10a) bildet, und wobei die eine Kerbreihe längs einer Kammlinie zwischen der dritten Oberfläche (10c) und der vierten Oberfläche (10d) gebildet wird, der Kerbabschnitt (11) nicht in einem Teil längs einer Kammlinie eines Eckteils (10f) vorgesehen ist, der durch die zweite Oberfläche (10b) und dritte Oberfläche (10c) gebildet wird, und in einem Teil längs einer Kammlinie eines Eckteils (10h), der durch die vierte Oberfläche (10d) und die erste Oberfläche (10a) gebildet wird.

## Revendications

1. Une méthode de production pour une ligne de coupe pour utilisation avec une débroussailleuse, la méthode de production comprenant les pas suivants:
le pas de formation d'entailles pour former une rangée d'entailles constituée par un grand nombre de portions d'entailles (11), orientées dans la même direction, sur une périphérie extérieure du corps de la ligne (10) le long d'une direction longitudinale dudit corps de la ligne (10); **caractérisée en ce qu'**elle comprend en outre les pas suivants:
le pas de torsion pour tordre le corps de la ligne (10) qui a effectué le pas de formation d'entailles, au moyen duquel on obtient la ligne de coupe où les portions d'entailles (11) constituant la même rangée d'entailles sont orientées dans différentes directions ; où
le corps de la ligne (10) a une surface périphérique extérieure d'une section transversale en forme de losange, ladite surface périphérique extérieure comprenant les éléments suivants:
une première face (10a);
une deuxième face (10b), formant un angle aigu par rapport à la première face (10a);
une troisième face (10c) formant un angle obtus par rapport à la deuxième face (10b);
une quatrième face (10d) formant un angle aigu par rapport à la troisième face (10c) et formant un angle obtus par rapport à la première face (10a); et
au cours du pas de formation d'entailles,
une rangée d'entailles est formée le long d'une ligne de crête entre la première face (10a) et la deuxième face (10b); et
l'autre rangée d'entailles est formée le long d'une ligne de crête entre la troisième face (10c) et la quatrième face (10d);
la portion d'entailles (11) n'est pas fournie sur une partie le long de la ligne de crête d'une portion de coude (10f) formée par la deuxième face (10b) et la troisième face (10c) et sur une partie le long de la ligne de crête d'une portion de coude (10h) formée par la quatrième face (10d) et la première face (10a).

2. La méthode de production pour la ligne de coupe conformément à la revendication 1, où, au cours du pas de formation d'entailles:
une rangée d'entailles constituée par un grand nombre de portions d'entailles (11a) orientées vers un côté est formée le long d'une direction longitudinale du corps de la ligne (10) sur la périphérie extérieure du corps de la ligne (10) sur un côté;
ce côté est perpendiculaire sur une direction à la direction longitudinale du corps de la ligne (10),
une autre rangée d'entailles constituée par un grand nombre de portions d'entailles (11b) orientées vers un autre côté est formée sur la périphérie extérieure du corps de la ligne (10) sur l'autre côté;
l'autre côté est l'autre direction par rapport à ladite direction qui est perpendiculaire à la direction longitudinale du corps de la ligne (10).

3. La méthode de production pour la ligne de coupe conformément à la revendication 2, où, au cours du pas de formation d'entailles, les portions d'entailles (11a) constituant une rangée d'entailles et les portions d'entailles (11b) constituant l'autre rangée d'entailles sont formées pour être échelonnées sur la direction longitudinale du corps de la ligne (10).

4. Une ligne de coupe pour utilisation avec une débroussailleuse, la ligne de coupe comprenant les éléments suivants: un corps de la ligne (10) ayant une structure torsadée; et
un nombre de portions d'entailles (11) formées de manière répétée le long d'une direction longitudinale du corps de la ligne (10) sur une périphérie extérieure du corps de la ligne (10), **caractérisée en ce que**:
les orientations des portions d'entailles (11), sur la direction perpendiculaire à une ligne centrale du corps de la ligne (10) le long de la direction longitudinale, varient en spirale sur la ligne du centre; où
le corps de la ligne (10) a une surface périphérique extérieure d'une section transversale en forme de losange, la surface périphérique extérieure comprenant les éléments suivants:
une première face (10a);
une deuxième face (10b), formant un angle aigu par rapport à la première face (10a);
une troisième face (10c) formant un angle obtus par rapport à la deuxième face (10b); et
une quatrième face (10d) formant un angle aigu par rapport à la troisième face (10c), et formant un angle obtus par rapport à la première face (10a); et
une rangée d'entailles est formée le long d'une ligne de crête entre la première face (10a) et la deuxième face (10b); et
l'autre rangée d'entailles est formée le long d'une ligne de crête entre la troisième face (10c) et la quatrième face (10d);
la portion d'entaille (11) n'est pas fournie sur une partie le long de la ligne de crête d'une portion de coude (10f) formée par la deuxième face (10b) et la troisième face (10c) et sur une partie le long de la ligne de crête d'une portion de coude (10h) formée par la quatrième face (10d) et la première face (10a).
